# EUROPEAN PATENT APPLICATION

(11) **EP 4 843 835 A1**
(43) Date of publication of application: **25.11.2026**
(21) Application number: 25226187.0
(22) Date of filing: 22.12.2025
(51) Int. Cl.: B60R 9/06, B60R 13/10, B60J 7/00

(54) **ANGLE-ADJUSTABLE CARRYING RACK**

(30) Priority: 22.05.2025 TW 114119222
(71) Applicant: King Rack Industrial Co., Ltd., Taichung City (TW)
(72) Inventor: Wang, Chiu-Kuei, Taichung City (TW); Espesset, Hugues, 81160 Saint-Juery (FR); Girod, Frédéric, 81160 Saint-Juery (FR)
(74) Representative: Cabinet Chaillot

(57) **Abstract**

An angle-adjustable carrying rack installed to a vehicle rear end includes a connecting seat (2) for connecting to a trailer ball (1) or a connecting tube at the rear end of the vehicle. A fixed seat (3) is connected to the connecting seat and provides support for the carrying rack (4). A carrying rack (4) with a frame structure is rotatably connected to the fixed seat through a pivot mechanism (31; 41). A release mechanism includes a foot-operated switch (5) disposed on the carrying rack, a cable (6) linked to the foot-operated switch, and a sliding member (61) disposed within the fixed seat. The sliding member slides along an elongated slot (81) to lock or release the tilting function of the carrying rack. The user can operate the release mechanism with one foot to quickly enter the tilting state, and through a spring structure (62), the sliding member automatically resets, improving operational convenience and safety.

## Description

### BACKGROUND OF THE INVENTION

### 1. Fields of the invention

The present invention relates to the field of vehicle accessories, and more particularly, to an angle-adjustable carrying rack with tilting functionality, particularly suitable for installation at the rear of vehicles, and can be used for equipment that enables convenient installation, removal, and tilting of carrying racks.

### 2. Descriptions of Related Art

Most carrying racks on the market are of fixed type. When not in use, the carrying racks typically occupy vehicle space. These fixed rack structures usually cannot adjust angles, resulting in situations where the carrying racks cause vehicle space wastage and are inconvenient to install and use when needed.

Therefore, how to provide an angle-adjustable carrying rack that can offer better flexibility between use and storage, addressing the deficiencies of existing technology, has become an urgent problem that needs to be resolved.

The present invention intends to provide an angle-adjustable carrying rack to eliminate the shortcomings mentioned above.

### SUMMARY OF THE INVENTION

The present invention relates to an angle-adjustable carrying rack and comprises a trailer ball, a connecting seat, a fixed seat, a carrying rack, a foot-operated switch and a linkage device.

The trailer ball or a connecting tube is adapted to be installed on a fixing device at a rear end of a vehicle, serving as a support point for a storage rack. The connecting seat secures the trailer ball or the connecting tube so that the carrying rack is fixed at the rear end of the vehicle. The fixed seat is configured with a U-shaped or V-shaped structure. The connecting seat is connected to a center portion of the fixed seat so as to support and secure the carrying rack. The carrying rack is installed on the fixed seat and is performs tilting movement relative to the fixed seat so as to achieve angle adjustment. The carrying rack has a frame structure and provides a license plate bracket installed at a front end of the carrying rack. The fixed seat includes a pivot seat, and the carrying rack includes a pivot portion. The pivot portion is pivotally connected to the pivot seat by a pin so that the carrying rack is rotated or tilted on the pivot seat. The carrying rack includes a tubular body at a center thereof. The connecting seat includes a fixing member at an upper end thereof. The fixing member has a U-shaped groove to fix a position of the carrying rack. The tubular body has a linkage end which is detachably connected to the fixing member. The foot-operated switch is connected to the tubular body opposite to the linkage end. The linkage device is disposed between the foot-operated switch and the linkage end. One end of the linkage device is fixed to the license plate bracket. The linkage end has an elongated slot. The linkage device has a sliding member located in the elongated slot. The sliding member is connected to a spring for reset.

When the foot-operated switch is stepped on by the user, the license plate bracket swings downward, the linkage device pulls the sliding member inside the linkage end to disengage the linkage end of the carrying rack from the fixing member, so that the carrying rack flips or angle adjustment.

Preferably, the linkage end includes a safety locking device. The safety locking device locks the sliding member in the U-shaped groove to prevent the carrying rack from flipping during driving.

Preferably, the spring resets the sliding member to its original position, such that when the foot-operated switch is not operated, the sliding member always remains in a locked state.

Preferably, the foot-operated switch includes a J-shaped rod body, a bent plate body and a torsion spring. When a user steps on the plate body, the rod body pulls the linkage device to disengage the sliding member from the U-shaped groove, and the torsion spring returns the foot-operated switch to an initial position of the foot-operated switch.

The primary object of the present invention is to provide an angle-adjustable carrying rack that enables the carrying rack to adjust to different tilt angles, achieving flexible carrying and storage functions.

The features and benefits of the present invention are summarized as follows:
1. Tilting function: Through pivot design and release mechanism, the carrying rack can tilt to different angles, facilitating access to items or storage.
2. Quick adjustment: Through the foot-operated switch and cable linkage mechanism, the carrying rack can be released with single-foot operation, enabling it to quickly enter the tilting state.
3. Secure locking: Combined with a safety locking device, ensures that the carrying rack will not loosen or accidentally tilt due to bumps during driving.
4. Automatic reset: The sliding member has a built-in spring, allowing the carrying rack to automatically return to the locked state when no force is applied, enhancing operational safety.
5. Enhanced convenience: Simply stepping on the foot-operated switch allows adjustment, this is suitable for single-person operation.
6. Multiple applications: In addition to serving as a rack for carrying items, it can also be combined with other accessories, such as luggage boxes.

The benefits and advantages ensure that the angle-adjustable carrying rack of the present invention is superior to traditional designs in terms of practicality, safety, and convenience, making it suitable as a highly competitive product in the market.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the present invention;
Figure 2 is a perspective view of the other side of Figure 1;
Figure 3 is an exploded perspective view of the structure of the present invention;
Figure 4 is a side view of the structure of the present invention;
Figure 5 is a cross-sectional view of the structure of the present invention;
Figure 6 shows an operational diagram (1) of the present invention;
Figure 7 shows another operational diagram (2) of the present invention;
Figure 8 shows another operational diagram (3) of the present invention;
Figure 9 shows another operational diagram (4) of the present invention;
Figure 10 shows a practical application diagram (1) of the present invention;
Figure 11 shows another practical application diagram (2) of the present invention, and
Figure 12 shows yet another practical application diagram (3) of the present invention.

### DETAILED DESCRIPTION OF THE PREFERRED EMBODIMENT

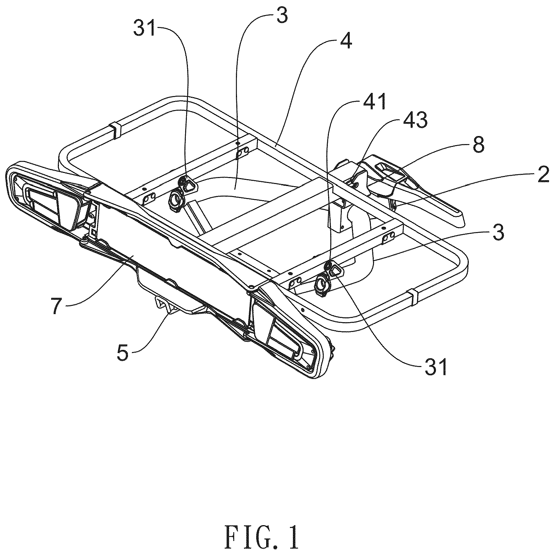

Referring to Figures. 1 to 3, the angle-adjustable carrying rack of the present invention comprises a trailer ball 1, a connecting seat 2, a fixed seat 3, a carrying rack 4, a foot-operated switch 5, and a linkage device 6. The drawings and description of the present invention are represented in the form of a trailer ball 1, which can be replaced by a connecting tube.

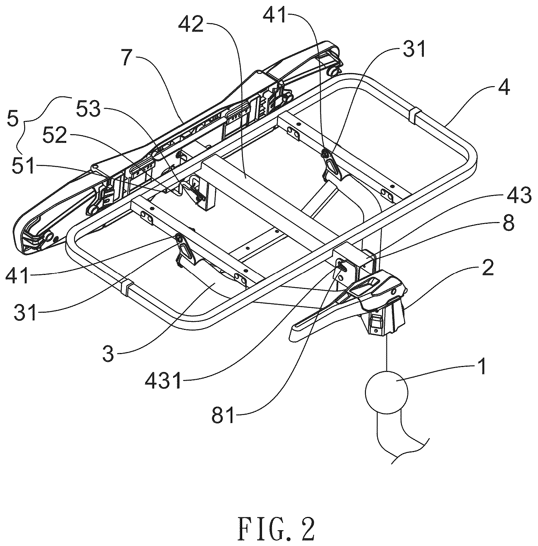

As shown in Figure 2, the trailer ball 1 is installed on a fixing device at the rear of the vehicle, serving as a support point for the carrying rack 4.

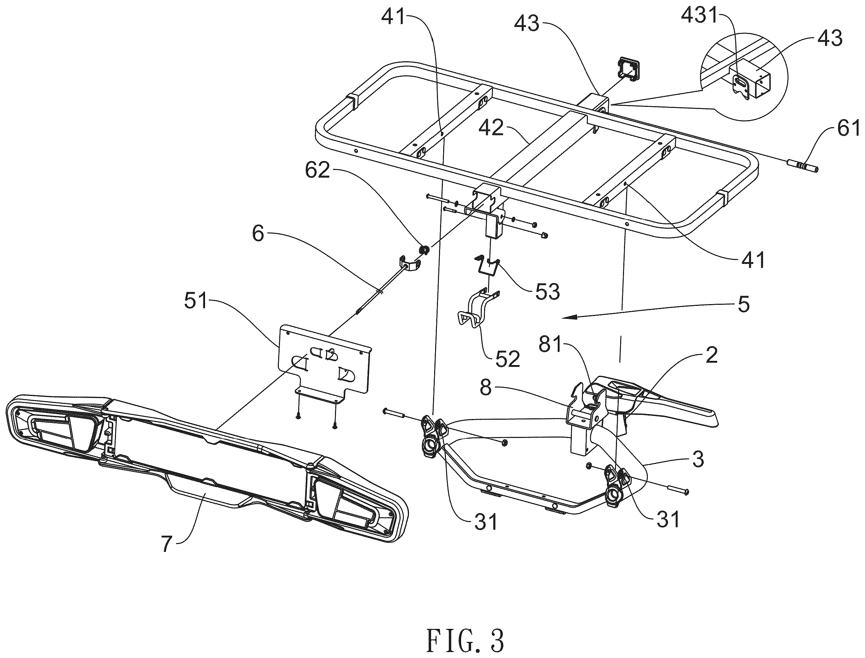

As shown in Figures 2 and 3, the connecting seat 2 is used to clamp the trailer ball 1, enabling the carrying rack 4 to be fixed at the rear end of the vehicle.

As shown in Figures 1 to 3, the fixed seat 3 is configured with a U-shaped or V-shaped structure, with its center connected to the connecting seat 2, supporting and securing the carrying rack 4.

As shown in Figures 1 to 3, the carrying rack 4 is installed on the fixed seat 3 and is able to perform tilting movement relative to the fixed seat 3, achieving angle adjustment. The carrying rack 4 has a frame structure and provides a license plate bracket 7 installed at the front end of the carrying rack 4.

As shown in Figures 1 to 3, the aforementioned fixed seat 3 is provided with a pivot seat 31, and the carrying rack 4 includes a pivot portion 41 at a predetermined position. The pivot portion 41 is pivotably connected to the pivot seat 31 through a pin, enabling the carrying rack 4 to rotate or tilt on the pivot seat 31.

As shown in Figures 3 to 9, the carrying rack 4 is provided with a tubular body 42 at its center. The connecting seat 2 is provided with a fixing member 8 at its upper end. The fixing member 8 has a U-shaped groove 81 for fixing the position of the carrying rack 4. The tubular body 42 has a linkage end 43, and the linkage end 43 is detachably connected to the fixing member 8. The tubular body 42 is provided with the foot-operated switch 5 on the end opposite to the linkage end 43. The linkage device 6 is disposed between the foot-operated switch 5 and the linkage end 43. One end of the linkage device 6 is fixed to the license plate bracket 7. The linkage end 43 has an elongated slot 431. The linkage device 6 is provided with a sliding member 61 in the elongated slot 431, and the sliding member 61 is connected to a spring 62 for reset.

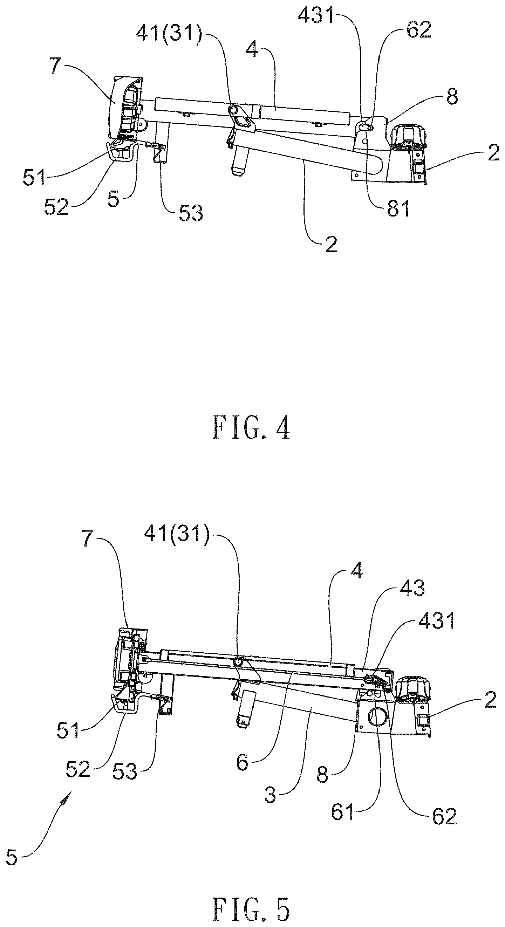

As shown in Figures 4 to 9, when the foot-operated switch 5 is stepped on by a user, the license plate bracket 7 swings downward, and the linkage device 6 pulls the sliding member 61 inside the linkage end 43 to disengage the linkage end 43 of the carrying rack 4 from the fixing member 8, such that the carrying rack 4 performs flipping or angle adjustment.

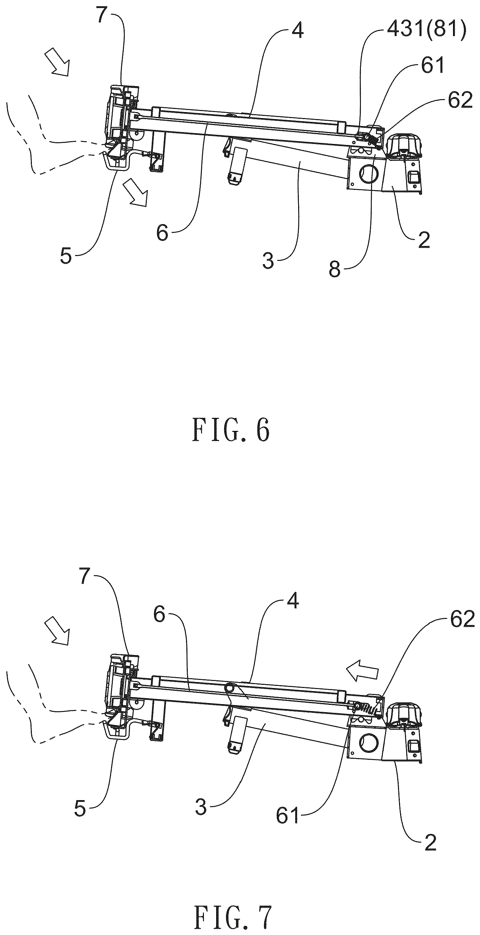

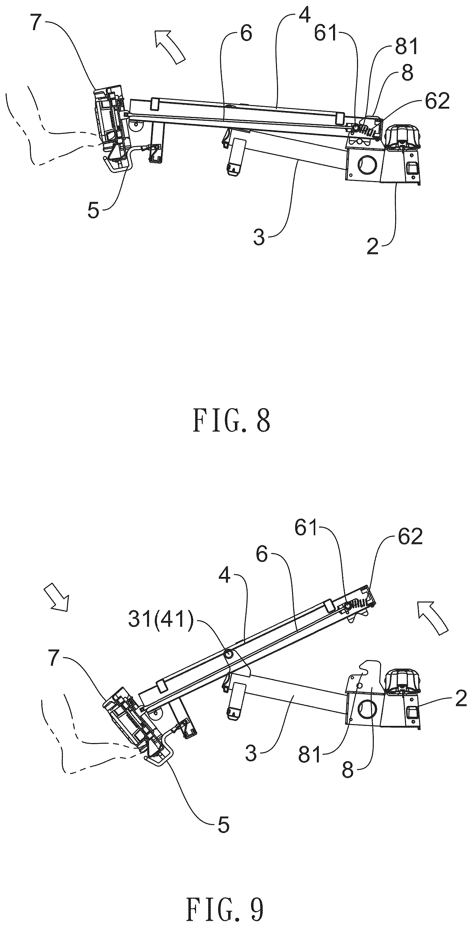

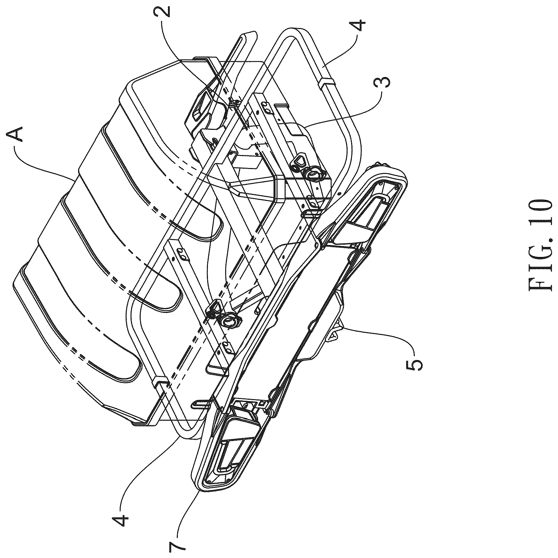

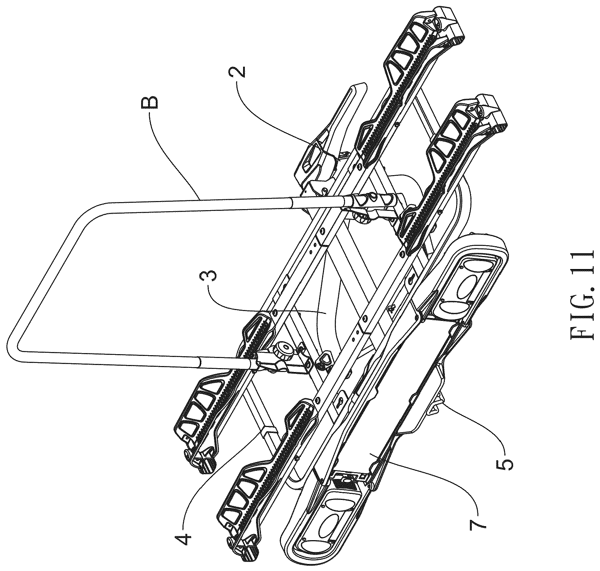

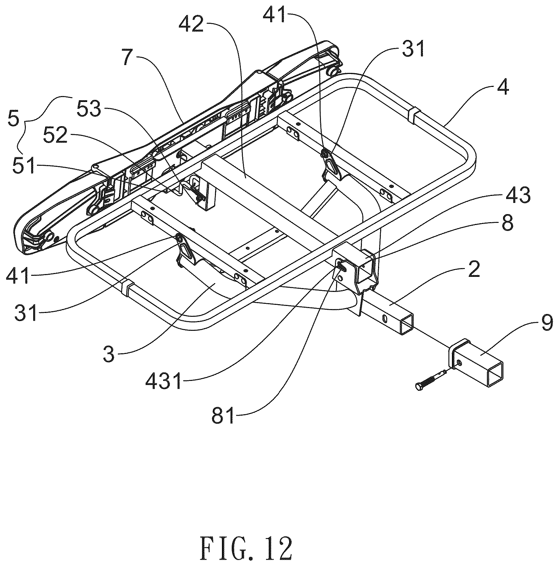

The present invention has the following advantages:
1. The linkage end 43 is provided with a safety locking device (not shown in the figure), the safety locking device can lock the sliding member 61 in the U-shaped groove 81 when needed, preventing the carrying rack 4 from accidentally flipping during driving.
2. As shown in Figures 3 to 5, the foot-operated switch 5 consists of a J-shaped rod body 51, a bent plate body 52, and a torsion spring 53. When the user wants to release the locked state, stepping on the plate body 52 with his/her foot allows the rod body 51 to pull the linkage device 6, causing the sliding member 61 to disengage from the U-shaped groove, and the torsion spring 53 returns the foot-operated switch 5 to its position.
3. As shown in Figure 6, the user steps on the foot-operated switch 5, causing the foot-operated switch 5 to gradually disengage the lower part of the license plate bracket 7.
4. As shown in Figure 7, the linkage device 6 can pull the sliding member 61, thus enabling the sliding member 61 to move along the elongated slot 431 from one end to the other end of the U-shaped groove 81, allowing the carrying rack 4 to be unlocked. In this state, the spring 62 is stretched and extended.
5. As shown in Figure 8, when the carrying rack 4 leaves the fixing member 8, as shown in Figure 9, the carrying rack 4 can achieve flipping or angle adjustment function relative to the fixed seat 3 through the pivot portion 41.
6. In addition to being able to place items directly on the carrying rack 4, as shown in Figure 10, a luggage box "A" can be installed on the carrying rack 4, or as shown in Figure 11, a bike carrying device "B" can be installed on the carrying rack 4. Accordingly, the present invention has multiple ways of use and possesses economic value. As also shown in Figure 12, the present invention is also applicable by changing the connecting seat 2 to a square tube form, which can be combined with the connecting tube 9 provided at the rear end of the vehicle, conforming to various configurations.

While we have shown and described the embodiment in accordance with the present invention, it should be clear to those skilled in the art that further embodiments may be made without departing from the scope of the present invention.

## Claims

1. An angle-adjustable carrying rack comprising:
a trailer ball (1), a connecting seat (2), a fixed seat (3), a carrying rack (4), a foot-operated switch (5) and a linkage device (6), **characterized in that**:
the trailer ball (1) or a connecting tube (9) is adapted to be installed on a fixing device at a rear end of a vehicle;
the connecting seat (2) secures the trailer ball (1) or the connecting tube (9), enabling the carrying rack (4) to be fixed at the rear end of the vehicle;
the fixed seat (3) is configured with a U-shaped or V-shaped structure, the connecting seat (2) is connected to a center portion of the fixed seat (3) so as to support and secure the carrying rack (4);
the carrying rack (4) is installed on the fixed seat (3) and is performs tilting movement relative to the fixed seat (3) so as to achieve angle adjustment, the carrying rack (4) has a frame structure and provides a license plate bracket (7) installed at a front end of the carrying rack (4);
the fixed seat (3) includes a pivot seat (31), the carrying rack (4) includes a pivot portion (41), the pivot portion (41) is pivotally connected to the pivot seat (31) by a pin so that the carrying rack (4) is rotated or tilted on the pivot seat (31);
the carrying rack (4) includes a tubular body (42) at a center thereof, the connecting seat (2) includes a fixing member (8) at an upper end thereof, the fixing member (8) has a U-shaped groove (81) to fix a position of the carrying rack (4), the tubular body (42) has a linkage end (43), the linkage end (43) is detachably connected to the fixing member (8), the foot-operated switch (5) is connected to the tubular body (42) opposite to the linkage end (43), the linkage device (6) is disposed between the foot-operated switch (5) and the linkage end (43), one end of the linkage device (6) is fixed to the license plate bracket (7), the linkage end (43) has an elongated slot (431), the linkage device (6) has a sliding member (61) located in the elongated slot (431), the sliding member (61) is connected to a spring (62) for reset;
when the foot-operated switch (5) is stepped on, the license plate bracket (7) swings downward, the linkage device (6) pulls the sliding member (61) inside the linkage end (43) to disengage the linkage end (43) of the carrying rack (4) from the fixing member (8), so that the carrying rack (4) flips or angle adjustment.

2. The angle-adjustable carrying rack as claimed in claim 1, wherein the linkage end (43) includes a safety locking device, the safety locking device locks the sliding member (61) in the U-shaped groove (81) to prevent the carrying rack (4) from flipping during driving.

3. The angle-adjustable carrying rack as claimed in claim 1, wherein the spring (62) resets the sliding member (61) to its original position, such that when the foot-operated switch (5) is not operated, the sliding member (61) always remains in a locked state.

4. The angle-adjustable carrying rack as claimed in claim 1, wherein the foot-operated switch (5) includes a J-shaped rod body (51), a bent plate body (52) and a torsion spring (53), when a user steps on the plate body (52), the rod body (51) pulls the linkage device (6) to disengage the sliding member (61) from the U-shaped groove (81), and the torsion spring (53) returns the foot-operated switch (5) to an initial position of the foot-operated switch (5).

5. The angle-adjustable carrying rack as claimed in claim 1, wherein the carrying rack (4) has a luggage box (A) installed thereto.

6. The angle-adjustable carrying rack as claimed in claim 1, wherein the carrying rack (4) has a bike carrying device (B) installed thereto.

7. The angle-adjustable carrying rack as claimed in claim 1, wherein the trailer ball (1) is replaced with a connecting tube (9).
